(19) Europäisches Patentamt
European Patent Office
Office européen des brevets

(11) EP 3 141 886 A1

(12) EUROPÄISCHE PATENTANMELDUNG

(43) Veröffentlichungstag:
15.03.2017 Patentblatt 2017/11

(51) Int Cl.:
*G01N 19/02* (2006.01)

(21) Anmeldenummer: 15002632.6

(22) Anmeldetag: 09.09.2015

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Veterinärmedizinische Universität Wien**
**1210 Vienna (AT)**

(72) Erfinder:
• **Peham, Christian**
**A-2540 Bad Vöslau (AT)**
• **Schramel, Johannes Peter**
**A-8243 Pinggau (AT)**

(74) Vertreter: **Peham, Alois**
**c/o Siemens AG Österreich**
**Siemensstrasse 90**
**1210 Wien (AT)**

(54) **VERFAHREN UND VORRICHTUNG ZUR BESTIMMUNG DES REIBUNGSKOEFFIZIENTEN ZWISCHEN DER OBERFLÄCHE EINES TESTOBJEKTES, INSBESONDERE EINES BODENS UND DER OBERFLÄCHE EINES TESTKÖRPERS**

(57) Verfahren und Vorrichtung zur Bestimmung des Reibungskoeffizienten zwischen der Oberfläche eines Testobjektes, insbesondere eines Bodens und der Oberfläche eines Testkörpers.

Ein Testkörper (1) wird über ein Kreuzgelenk (2) über eine Feder (5) unter dem Eigengewicht der Operatoren auf einen Boden oder eine Oberfläche (13) gepresst. Der Testkörper (1)und der Träger (3) sind drehbar in einem Gehäuse (8) gelagert. Der Operator bringt mit einem Drehmomentschlüssel (10) ein Drehmoment M auf den Testkörper (1) wodurch sich dieser relativ zum Boden dreht. Aus dem maximalen Drehmoment wird der Reibungskoeffizient zwischen Testkörper (1) und Boden (13)ermittelt.

Fig. 1

EP 3 141 886 A1

**Beschreibung**

Verfahren und Vorrichtung zur Bestimmung des Reibungskoeffizienten zwischen der Oberfläche eines Testobjektes, insbesondere eines Bodens und der Oberfläche eines Testkörpers.

Die Erfindung betrifft ein Verfahren und eine Vorrichtung zur Bestimmung des Reibungskoeffizienten zwischen der Oberfläche eines Testobjektes, insbesondere eines Bodens und der Oberfläche eines Testkörpers.

Die Bestimmung der Trittfestigkeit, insbesondere der Rutschfestigkeit von Oberflächen ist vor allem bei Böden, die zur Ausübung verschiedener Sportarten vorgesehen sind, von besonderer Bedeutung. Dazu ist die Bestimmung des Reibungskoeffizienten zwischen der Oberfläche und des berührenden Gegenstandes wie beispielweise einer Schuhsohle oder eines Hufes erforderlich.

Die optimale Beschaffenheit des Bodens führt nicht nur zu einer Verbesserung der sportlichen Leistungen, sondern auch zur Verringerung der Verletzungsgefahr und ist in manchen Regelwerken von Sportarten auch vorgeschrieben.

Dagegen vermindert eine ungünstige Beschaffenheit der Oberfläche die Trittsicherheit, das Risiko von Verletzungen von Sehnen, Bändern und Gelenken und die Belastung des Bewegungsapparates werden erhöht, wodurch Langzeitschäden zunehmen.

Dabei ist sowohl ein zu niedriger als auch ein zu hoher Wert des Reibungskoeffizienten ungünstig, da sowohl ein zu rasches Abbremsen eines Fußes, als auch Ausrutschen zu einer erhöhten Belastung des Bandapparates und der Gelenke führt.

Eine regelmäßige Kontrolle des Bodens durch den jeweiligen Betreiber und eine Anpassung der Wartungsarbeiten an individuelle Verhältnisse kann die Situation entscheidend verbessern und den Reibungskoeffizienten in einem für die jeweilige Sportart günstigen Bereich halten. Besonders Böden wie Rasen oder Sand bedürfen einer regelmäßigen Beurteilung der Eigenschaften vor Ort.

Die Ermittlung des aktuellen Reibungskoeffizienten kann auch vor der Ausübung einer Sportart die Entscheidung zur Verwendung eines bestimmten Schuhwerkes oder Hufbeschlages unterstützen.

Viele Testverfahren sind in Normen festgelegt die auch einer ständigen Weiterentwicklung unterliegen. Die darin beschriebenen Vorrichtungen sind meist nicht für die Anwendung durch den Betreiber geeignet, sondern Testinstituten vorbehalten.

Eine derartige Vorrichtung zur Bestimmung des Reibungskoeffizienten von Böden im Besonderen von künstlichem Rasen wird in der WO2004/051239 offenbart. Die in der Schrift dargestellte Vorrichtung besteht aus einem Gestell, das auf den zu untersuchenden Boden gestellt wird, mit einem vertikal verschiebbaren und mit einem Gewicht belasteten drehbar gelagerten Schaft.

Am drehbaren Schaft ist ein Testkörper in Form eines Fußes oder Schuhs befestigt. Weiterhin sind eine Antriebseinheit zur Drehung des Schaftes und Mess-, Berechnungs- und Anzeigemittel zur Bestimmung des zwischen Boden und Testkörper auftretenden maximalen Drehmomentes vorgesehen.

Ein Nachteil der in der WO2004/051239 beschriebenen Vorrichtung sind Größe und Masse der Apparatur. Um einen ausreichenden Anpressdruck zur Messung des Drehmomentes M zu erzielen müssen abnehmbare Gewichte mit etwa 50 kg - 80 kg Masse an der Vorrichtung befestigt werden, um das Gewicht beispielsweise eines Sportlers nachzubilden. Dieses Gewicht erhöht das Gesamtgewicht der Vorrichtung wesentlich und diese kann damit nicht mehr an den Einsatzort ohne Hilfsmittel verbracht werden.

Der Erfindung liegt daher die Aufgabe zugrunde, ein vereinfachtes Verfahren und eine Vorrichtung zur Bestimmung des Reibungskoeffizienten zwischen der Oberfläche eines Testobjektes, insbesondere eines Bodens und der Oberfläche eines Testkörpers bereitzustellen.

Diese Aufgabe wird gelöst mit einer Vorrichtung gemäß Anspruch 1 und mit einem Verfahren gemäß Anspruch 7.

Die Erfindung ermöglicht auf einfache Weise die Messung des Reibungskoeffizienten zwischen unterschiedlichsten Materialien und Testkörpern wie Schuhen, Füßen, Hufen, Hufbeschlägen und Klauen. Die Vorrichtung ist leicht und einfach zu transportieren und kann daher vor Ort zum Einsatz kommen.

Vorteilhafte Ausgestaltungen ergeben sich aus den Unteransprüchen.

Die Erfindung wird anhand eines in der Figur dargestellten Ausführungsbeispieles näher erläutert.

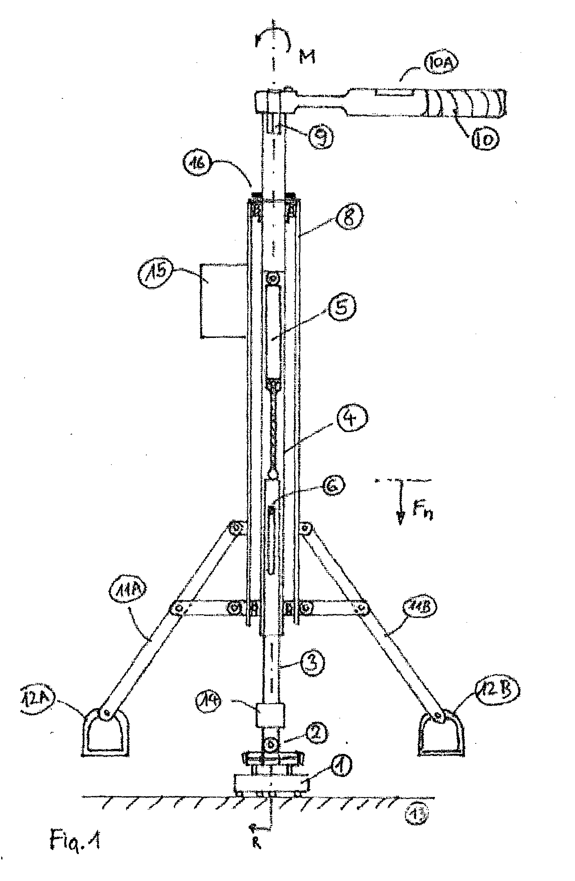

Fig. 1 zeigt beispielhaft eine schematische Darstellung der wesentlichen Systemkomponenten.

Die Vorrichtung nach Fig. 1 umfasst einen Testkörper 1, der bei dem gegenständlichen Ausführungsbeispiel eine Hufeisenform mit Stollen aufweist, sodass damit die Bedingungen für Pferde z.B. auf einer Trabrennbahn gemessen werden können.

Grundsätzlich kann der Testkörper 1 auch eine andere, dem jeweiligen Anwendungsfall angepasste Form aufweisen, wie beispielsweise die Form eines Fußes, einer Klaue, eines Schuhs, oder andere Formen wie Scheiben, Scheiben mit Stollen oder Scheiben mit rutschhemmenden Sohlenmaterialien. Dabei ist die Größe, Form und das Material der Kontaktfläche die wesentliche Eigenschaft zum Test der Reibepartner.

Der Testkörper 1 ruht eben auf der zu bestimmenden Oberfläche eines Bodens 13 und ist über ein Kreuzgelenk 2 mit einem Träger 3 verbunden. Der Träger 3 gleitet vertikal in einem Schaft 4 und wird von einer Feder 5 mit einer Anpresskraft $F_n$ in Richtung des Testkörpers 1 gepresst. Träger 3 und Schaft 4 sind durch einen Mitnehmer 6 verbunden, sodass ein Drehmoment $M$ vom Schaft 4 auf den Träger 3 und über das Kreuzgelenk 2 auf den Testkörper 1 übertragen werden kann.

Der Schaft 4 ist in einem Gehäuse 8 drehbar gelagert und hat an seinem oberen Ende einen Vierkant 9 zum Anschluss eines Drehmomentenschlüssels 10 mit Anzeige 10A und Maximalwertspeicher befestigt. Am Gehäuse 8 sind Ausleger 11A, 11B mit Fußhalterungen 12A, 12B befestigt. Die Ausleger 11A, 11B sind für den Transport einklappbar und in der Lage am Gehäuse verstellbar.

Die Lage wird so eingestellt, dass auch nach der Messung der Testkörper 1 unter der Kraft der Feder auf den Boden gedrückt wird. Vorzugsweise wird die gesamte Länge der Vorrichtung so gewählt dass der Drehmomentenschlüssel 10 etwa in einer Höhe von 90 cm bis 110 cm liegt.

Die Kraft der Feder 5 bestimmt die vertikale Anpresskraft $F_n$ des Testkörpers 1 und liegt im Bereich von 300N bis 1000N. Der Wert sollte nahe der tatsächlich auftretenden vertikalen Kraft $F_n$ liegen. Da der Testkörper beispielsweise bei Sandböden durch die Drehung in den Boden 13 einsinkt soll die Federkraft weitgehend konstant gehalten werden. Das wird erfindungsgemäß durch eine Gasdruckfeder oder mit einer Feder mit flacher Federkonstante erreicht.

Zur Bestimmung der Anpresskraft $F_n$ kann ein Kraftmessmittel 14 in den Träger 3 eingefügt werden. Die Anpresskräft kann auch mit einer Waage vor einer Messung ermittelt werden.

Zur Messung belasten zwei Operatoren A und B mit einem Teil ihres Eigengewichtes die Fußhalterungen 12A und 12B damit diese den Boden berühren. Dabei verschiebt sich der Träger 3 vertikal im Schaft 4 und spannt die Feder 5. Dadurch wird der Testkörper 1 über das Kreuzgelenk 2 eben auf den Boden 13 gepresst und das Gehäuse 8 kann von einem Operator (A oder B) senkrecht gestellt werden.

Einer der Operatoren A oder B dreht den Drehmomentenschlüssel 10 etwa um einen Winkel von 45° bis ein Maximalwert des Drehmomentes $M$ abgelesen werden oder gespeichert werden kann.

Der Drehwinkel zwischen Gehäuse 8 und dem Schaft 4 kann mit einem Messmittel oder Anzeigemittel 16 festgestellt werden.

Die Ausleger 11A und 11B sind vorzugsweise in der Lage am Gehäuse 8 verstellbar um die Vorspannung der Feder 5 an die Höhe des Testkörpers 1 anzupassen.

Die Ausleger 11A und 11B sind vorzugsweise klappbar befestigt um den Transport der Vorrichtung zu vereinfachen.

Die Messung wird an mehreren Stellen des Bodens 13 wiederholt und der Mittelwert der Ergebnisse wird gebildet.

Das Ergebnis ist abhängig auch von der tatsächlichen Anpresskraft $F_n$ der Feder 5 und der Gewichtskraft des Testkörpers. Es kann ein weitgehend linearer Zusammenhang zwischen Drehmoment $M$ und vertikaler Anpresskraft $F_n$ angenommen werden. Durch

Multiplikation des Ergebnisses mittels eines Korrekturfaktors $x = F_{soll}/F_{ist}$ kann das Messergebnis an die gewünschte Vertikale Anpresskraft $F_{soll}$ angepasst werden.

Der Reibungskoeffizient $\mu$ errechnet sich bei einer linearen Belegung zu $\mu = F/F_n$ wobei $F_n$ die Vertikalkraft ist. Bei der Messung des Drehmomentes $M$ wie in der gegenständlichen Vorrichtung beschrieben gelten die Gesetzmäßigkeiten der Reibung von Stützzapfen (siehe Hütte, Des Ingenieurs Taschenbuch) wobei der mittlere Radius R des Testkörpers 1 in die Berechnung eingeht.

$$\mu \;=\; M \;/\; (k * R * F_n)$$

Der Faktor $k$ ist experimentell zu bestimmen und von der Form (Auflagefläche) des Testkörpers abhängig. Der Wert liegt zwischen 0.3 bis 1.

Durch die Nutzung des Eigengewichtes der Operatoren A und B kann ein Anpressdruck des Testkörpers 1 im Bereich von 700 N bis 1000 N bei einem Eigengewicht der Vorrichtung von deutlich unter 10 kg erreicht werden. Dadurch ist die Vorrichtung leicht transportierbar und vielseitig einsetzbar.

Das Kraftmessmittel 14 kann auch ein Drehmomentmessmittel enthalten die mit Rechenmittel 15 mit Anzeigemittel und Speichermittel verbunden sind.

Die Erfindung ist in vorteilhafter Weise in allen Fällen anwendbar, in denen der Reibungskoeffizient zwischen Oberflächen und Testkörpern wie Sportschuhe, Barfuß aber auch Hufe, Klauen unterschiedlicher Spezies vor Ort bestimmt werden muss, um so beispielsweise zur Auswahl geeigneter Materialen wie Schuhe, Stollenlänge etc. beizutragen.

Insbesondere scheinen die folgenden Anwendungsfälle geeignet,

- die Qualitätskontrolle, das
- Design von Böden, und das
- Design von Schuhen oder Hufbeschlägen
- die Auswahl oder Anpassung eines Schuhes oder Hufbeschlages unmittelbar vor der Austragung eines Bewerbes zur Anwendung beispielsweise im Sport und Reitsport, bei dem die Performance in unterschiedlichen Disziplinen wie z. B.: Dressur-, Spring-, Galopprenn-, Polo, Trabrenn- und Vielseitigkeitsbewerben von der Bodenbeschaffenheit abhängig ist und daher die Ermittlung der Rutschfestigkeit (Grip, Traction) eine entscheidender Bedeutung hat.

Dies ist im Weiteren nicht nur in der Pferdehaltung, sondern allgemein in jeder Tierhaltung von Bedeutung, da die Auswahl des geeigneten Bodens der Verletzungsgefahr entgegen wirken kann und das Wohlbefinden der Tiere fördert und ein Gebot des Tierschutzes ist.

Dies gilt insbesondere bei der Haltung von Nutztieren (Rindern, Schafe, Schweine ua.), da nur gesunde Tiere die Basis für einwandfreie Produkte bilden. Z. B. profitieren auch Zootiere von einer optimalen Rutschfestigkeit die für eine artgerechte Haltung auch im Sinne des Tierschutzes anzustreben ist.

Die Bestimmung der Rutschfestigkeit spielt aber auch bei Sportarten wie Fußball, American Football, Rugby, Baseball, Bowling, Tennis, Handball, Faustball, Volleyball, Tanzen eine besondere Rolle, da ein ungeeigneter Boden das Verletzungsrisiko erhöhen kann und chronische Leiden verursachen kann.

An Orten zur körperlichen Ertüchtigung wie Turnsäle Fitnessstudios oder Kinderspielplätze aber auch in Küchen, Bädern, Garagen ist die Rutschfestigkeit eines Bodens von Bedeutung um Stürze zu vermeiden.

Denkbar ist auch der Einsatz der Erfindung zur Überprüfung von Materialien wie Schuhe aller Art insbesondere Sportschuhe, der Einfluss von Reinigungsmittel oder Pflegemittel oder Verschmutzungen durch Gleitstoffe wie Fette, und Öle. Aber auch Hufbeschläge aller Art, Stollen, Hufeinlagen sowie Hufschuhe können im Zusammenhang mit einem bestimmten Boden oder einer bestimmten Bodenbeschaffenheit untersucht werden.

Bezugszeichenliste

| | |
|---|---|
| 1 | Testkörper |
| 2 | Kreuzgelenk |
| 3 | Träger |
| 4 | Schaft |
| 5 | Feder |
| 6 | Mitnehmer |
| 7 | Vierkant |
| 8 | Gehäuse |
| 9 | Vierkant |
| 10 | Drehmomentenschlüssel |
| 10A | Anzeige auf Drehmomentenschlüssel |
| 11A, 11B | Ausleger |
| 12A, 12B | Fußhalterung |
| 13 | Boden / Oberfläche |
| 14 | Kraftmessmittel |
| 15 | Rechenmittel mit Anzeigemittel und Speichermittel |
| 16 | Messmittel oder Anzeigemittel für den Drehwinkel |
| $F_n$ | Vertikalkraft |
| $M$ | Drehmoment |
| $R$ | mittlerer Radius des Testkörpers 1 |

## Patentansprüche

1. Vorrichtung zur Bestimmung des Reibungskoeffizienten zwischen der Oberfläche eines Testobjektes, insbesondere eines Bodens und der Oberfläche eines Testkörpers, **dadurch gekennzeichnet, dass**

   - ein mittels Ausleger (11A, 11B) und Fußhalterungen (12A, 12B) durch zumindest einen Operator relativ zu der Oberfläche des Testobjektes fixierbares Gehäuse (8) vorgesehen ist, dass weiterhin
   - ein Testkörper (1) vorgehen ist, der über ein Kreuzgelenk(2) und zumindest eine Feder (5) drehbar und gefedert so in dem Gehäuse (8) gelagert ist, dass
   - während des Messvorganges die Oberfläche des Testkörpers (1) mit einer definierten Kraft auf die Oberfläche des Testobjektes (13)gepresst wird, dass
   - Mittel zum Drehen des Testkörpers (1) während des Messvorganges und Messmittel (10, 14) zur Erfassung des beim Drehen entstehenden Drehmomentes und
   - Mittel zur Bestimmung des Reibungskoeffizienten aus dem gemessenen Drehmoment und der Federkraft vorgesehen sind.

2. Vorrichtung nach Anspruch 1, **dadurch gekennzeichnet, dass** die Kraft der Feder (5) größer als die Gewichtskraft der Vorrichtung ist.

3. Vorrichtung nach Anspruch 1 oder 2, **dadurch gekennzeichnet, dass** Messmittel (14)für die Kraft der Feder (5) vorhanden sind.

4. Vorrichtung nach Anspruch 1 oder 2, **dadurch gekennzeichnet, dass** Rechenmittel (15) zur Berechnung des Reibungskoeffizienten bei einer standardisierten Normalkraft vorhanden sind.

5. Vorrichtung nach Anspruch 1 oder 2, **dadurch gekennzeichnet, dass** die Ausleger (11A) und (11B) am Gehäuse (8) verstellbar und klappbar befestigt sind.

6. Vorrichtung nach Anspruch 1, **dadurch gekennzeichnet, dass** die Fußhalterungen (12A, 12B) die Form eines Steigbügels aufweisen.

7. Verfahren zum Betrieb einer Vorrichtung nach einem der Ansprüche 1 bis 6, **dadurch gekennzeichnet, dass**

   - zumindest ein Operator mittels Ausleger (11A, 11B) und Fußhalterungen (12A, 12B) das Gehäuse (8)relativ zu der Oberfläche des Testobjektes fixiert und den Testkörper (1) auf die Oberfläche des Testobjektes (13) presst, dass
   - der Testkörper (1) gedreht wird und das beim Drehen entstehende Drehmoment mit Messmittel (10, 14)erfasst und dass
   - der Drehwinkel mit Messmittel (16) erfasst wird und bei Erreichen eines bestimmten Wertes die Drehung des Drehmomentenschlüssels (10) beendet wird und dass
- der Reibungskoeffizient aus dem gemessenen Drehmoment und der Federkraft ermittelt wird.

Fig.1

Europäisches
Patentamt

European
Patent Office

Office européen
des brevets

**EUROPÄISCHER RECHERCHENBERICHT**

Nummer der Anmeldung

EP 15 00 2632

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | WO 2004/051239 A1 (TEN CATE THIOLON BV [NL]; OLDE WEGHUIS MARINUS HENDRIKUS [NL]; BIERMA) 17. Juni 2004 (2004-06-17) * das ganze Dokument * ----- | 1-7 | INV. G01N19/02 |
| Y | US 4 130 007 A (HAYASHI HIDEKI) 19. Dezember 1978 (1978-12-19) * Abbildung 1 * ----- | 1-7 | |
| A | EP 2 578 102 A1 (VIBRAM SPA [IT]) 10. April 2013 (2013-04-10) * Zusammenfassung * * Abbildungen 1, 3, 6 * ----- | 1 | |
| A | WO 2012/162516 A1 (TEXTILE MAN ASSOCIATES INC [US]; YNGVE PAUL W [US]) 29. November 2012 (2012-11-29) * Zusammenfassung; Abbildung 1 * ----- | 1 | |

RECHERCHIERTE
SACHGEBIETE (IPC)

G01N
G01M

Der vorliegende Recherchenbericht wurde für alle Patentansprüche erstellt

| Recherchenort | Abschlußdatum der Recherche | Prüfer |
|---|---|---|
| Den Haag | 1. März 2016 | Kister, Clemens |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    ....................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 00 2632

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2016

| Im Recherchenbericht angeführtes Patentdokument | Datum der Veröffentlichung | Mitglied(er) der Patentfamilie | Datum der Veröffentlichung |
|---|---|---|---|
| WO 2004051239 A1 | 17-06-2004 | AU 2003266731 A1<br>CN 1717580 A<br>EP 1563276 A1<br>JP 2006506652 A<br>NL 1021957 C2<br>US 2006130556 A1<br>WO 2004051239 A1 | 23-06-2004<br>04-01-2006<br>17-08-2005<br>23-02-2006<br>24-05-2004<br>22-06-2006<br>17-06-2004 |
| US 4130007 A | 19-12-1978 | JP S5366287 A<br>JP S5537691 B2<br>US 4130007 A | 13-06-1978<br>30-09-1980<br>19-12-1978 |
| EP 2578102 A1 | 10-04-2013 | KEINE | |
| WO 2012162516 A1 | 29-11-2012 | CA 2837337 A1<br>US 2012297889 A1<br>WO 2012162516 A1 | 29-11-2012<br>29-11-2012<br>29-11-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004051239 A